# EUROPÄISCHE PATENTSCHRIFT

(11) **EP 3 007 471 B1**
(45) Veröffentlichungstag und Bekanntmachung des Hinweises auf die Patenterteilung: **26.12.2018**
(21) Anmeldenummer: 15181195.7
(22) Anmeldetag: 17.08.2015
(51) Int. Cl.: H04W 4/50, H04W 4/80, H04L 29/08, B25B 21/00

(54) **VERFAHREN UND VORRICHTUNG ZUR DRAHTLOSEN KOMMUNIKATION ZWISCHEN EINEM WEBHOSTSERVER UND TRAGBAREN WERKZEUGEN**
METHOD AND APPARATUS FOR WIRELESS COMMUNICATION BETWEEN A WEBHOSTSERVER AND PORTABLE TOOLS
PROCÉDÉ ET APPAREIL DESTINÉ À LA COMMUNICATION SANS FIL ENTRE UN SERVEUR WEB ET DES OUTILS PORTATIFS

(30) Priorität: 07.10.2014 DE 102014220215
(43) Veröffentlichungstag der Anmeldung: 13.04.2016
(73) Patentinhaber: ROBERT BOSCH GMBH, 70442 Stuttgart (DE)
(72) Erfinder: Kubitschek, Ralf, 73113 Ottenbach (DE)
(74) Vertreter: Thürer, Andreas

(56) Entgegenhaltungen:
- US-A1- 2006 155 582
- US-A1- 2012 173 735
- D-Link: "DWL-3140AP Version 1.2 Smart WLAN Manager User Manual", , 9. Februar 2009 (2009-02-09), Seiten 1-53, XP055243471, Gefunden im Internet: URL:ftp://ftp.dlinkla.com/pub/DWL-3140AP/M ANUAL_DWL-3140AP_Manager_v1.20(B).pdf [gefunden am 2016-01-21]

## Beschreibung

Die vorliegende Erfindung betrifft ein Verfahren zur drahtlosen Kommunikation zwischen einem Webhostserver und zumindest zwei tragbaren Werkzeugen sowie ein Kommunikationssystem zur drahtlosen Kommunikation.

Das hier beschriebene Verfahren zur drahtlosen Kommunikation umfasst einen Webhostserver sowie zumindest zwei tragbare Werkzeuge, welche Werkzeuge jeweils Mittel zur drahtlosen Kommunikation sowie einen Datenspeicher und eine Werkzeugsteuerung umfassen.

Bekannt ist, dass für jedes der tragbaren Werkzeuge sich der Bediener auf dieses separat einloggen muss und nach dem jeweils separaten Einloggen für jedes der tragbaren Werkzeuge eine Kommunikationsverbindung mit dem Webhostserver hergestellt werden kann. Insbesondere zum Aufspielen von Kommunikationsdaten, wie z.B. einem Firmware-Update auf jedes der tragbaren Werkzeuge, war dies bisher sehr aufwendig, da für jedes der tragbaren Werkzeuge der Bediener separat und in besonders aufwendiger Art und Weise die hier beschriebene Kommunikationsverbindung erzeugen musste.

Ausgehend hiervon ist es daher eine Aufgabe der vorliegenden Erfindung, die oben genannten Probleme zu beseitigen und insofern ein Verfahren zur drahtlosen Kommunikation zwischen einem Webhostserver und zumindest zwei tragbaren Werkzeugen zu erzeugen, bei der eine Kommunikationsverbindung zwischen den beiden tragbaren Werkzeugen und dem Webhostserver und insbesondere ein Firmware-Update der tragbaren Werkzeuge in besonders einfacher Art und Weise hergestellt werden kann.

Diese Aufgabe wird durch den Gegenstand der unabhängigen Patentansprüche gelöst.

Um nun ein Verfahren zur drahtlosen Kommunikation zwischen einem Webhostserver und zumindest zwei tragbaren Werkzeugen herzustellen, bei dem eine drahtlose Kommunikation zwischen den Werkzeugen und dem Webhostserver in besonders einfacher und zeitsparender Art und Weise hergestellt ist, macht die vorliegende Erfindung unter anderem von der Idee Gebrauch, dass über den Webhostserver Kommunikationsdaten, insbesondere ein Firmware-Update, auf jedes der tragbaren Werkzeuge aufgespielt wird und wobei die tragbaren Werkzeuge innerhalb des gleichen Sub-Netzwerkes mit dem Webhostserver und/oder untereinander in Kommunikationsverbindung stehen.

"Subnetz" wird als ein Teilnetz eines Netzwerkes des Internetprotokolls (IP) bezeichnet. Es fasst mehrere aufeinanderfolgende IP-Adressen mittels einer Subnetzmaske an binären Grenzen unter einem gemeinsamen Vorderteil, dem Präfix, zusammen. Die Abtrennung des vom Subnetz erfassten Bereiches erfolgt mittels bit-weiser Maskierung eines bestimmten Teils der IP-Adresse durch die Subnetzmaske. Will man nun beispielsweise ein spezifisches Subnetz bezeichnen, gibt man die erste Adresse dieses Subnetzes zusammen mit der Subnetzmaske oder der Präfixlänge an.

Beispielsweise bei einem Firmware-Update eines der tragbaren Werkzeuge können sogleich auch alle übrigen und/oder eine bestimmte Anzahl aller übrigen von im gleichen Subsystem eingeloggten und betriebenen tragbaren Werkzeuge mit upgedated werden, ohne dass sich auf jedes einzelne Werkzeug der Bediener zuvor separat eingloggen müsste.

Mit anderen Worten entfällt daher auch der Verfahrensschritt, wonach sich bei bisher aus dem Stand der Technik bekannten webbasierten Schraubsystemen sich auf jedes der tragbaren Werkzeuge erst eingeloggt werden muss, um ein Update anzustoßen.

Gemäß zumindest einer Ausführungsform umfasst das Verfahren zur drahtlosen Kommunikation zwischen einem Webhostserver und zumindest zwei tragbaren Werkzeugen den hier beschriebenen Webhostserver sowie die hier beschriebenen zumindest zwei tragbaren Werkzeuge, welche Werkzeuge jeweils Mittel zur drahtlosen Kommunikation sowie einen Datenspeicher und eine Werkzeugsteuerung umfassen, wobei über den Webhostserver Kommunikationsdaten, insbesondere ein Firmware-Update, auf jedes der tragbaren Werkzeuge aufgespielt werden. Dabei sind die tragbaren Werkzeuge innerhalb des gleichen Subsystems mit dem Webhostserver und/oder untereinander in Kommunikationsverbindung miteinander verbunden.

Gemäß zumindest einer Ausführungsform wird von dem Webhostserver eine Auswahlliste bereitgestellt, wobei auf der Auswahlliste alle tragbaren Werkzeuge des gleichen Subsystems dargestellt sind und wobei von einem Bediener diejenigen tragbaren Werkzeuge ausgewählt werden, für welche eine drahtlose Kommunikation untereinander und/oder mit dem Webhostserver etabliert werden soll.

Denkbar ist, dass eine derartige Auswahlliste, welche auf dem Webhostserver hinterlegt ist und/oder von dem Webhostserver generiert wird, auf einer Anzeigevorrichtung dargestellt wird. Beispielsweise kann dann der jeweilige Bediener über die durch das Anzeigemittel dargestellte Auswahlliste in besonders einfacher Art und Weise diejenigen tragbaren Werkzeuge bzw. die IP-Adressen, welche den tragbaren Werkzeugen eindeutig, vorzugsweise eineindeutig zugeordnet sind, auswählen, beispielsweise anklicken, welchen jeweils das gleiche Firmware-Update aufgespielt werden soll.

Gemäß zumindest einer Ausführungsform ist eine Kommunikationsverbindung zwischen dem Webhostserver und jedem der tragbaren Werkzeuge über einen gemeinsamen Accesspoint-Server etabliert.

Ein derartiger Accesspoint-Server kann entweder mit dem Webhostserver beispielsweise in einem gemeinsamen Gehäuse verbaut sein oder aber stattdessen auch räumlich getrennt, beispielsweise in zwei separaten Gehäusen und auch beabstandet voneinander, angeordnet sein.

Insbesondere ist denkbar, dass der Webhostserver und der Accesspoint-Server über zwei voneinander unabhängige Betriebssysteme betrieben werden. Denkbar ist jedoch auch, dass der Webhostserver und der Accesspoint-Server über gleichartige oder gar das gleiche Betriebssystem betrieben werden.

Die Kommunikationsdaten, welche auf vorher von dem Bediener ausgewählte tragbare Werkzeuge aufgespielt werden sollen, werden daher zunächst von dem Webhostserver insbesondere drahtlos an den Accesspoint-Server übertragen.

Da nun zumindest alle von dem Bediener ausgewählten tragbaren Werkzeuge in drahtloser Kommunikationsverbindung mit dem Accesspoint-Server stehen, werden anschließend von dem Accesspoint-Server diese Kommunikationsdaten, insbesondere das oben beschriebene Firmware-Update, auf jedes der vorher ausgewählten tragbaren Werkzeuge aufgespielt. Der Accesspoint-Server übernimmt daher die Rolle eines zentralen Kommunikationsverbindungspunktes.

Denkbar ist jedoch auch, dass bereits ein auf eines der tragbaren Werkzeuge aufgespieltes Firmware-Update von diesem tragbaren Werkzeug ausgehend zunächst das Firmware-Update an den Accesspoint versendet wird und im Anschluss daran von diesem Accesspoint die Kommunikationsdaten an eine von dem Bediener vorher ausgewählte Anzahl von tragbaren Werkzeugen des gleichen Subnetzwerkes aufgespielt wird. In einer derartigen Situation kann daher dieses tragbare Werkzeug die Rolle eines weiteren Webhostservers übernehmen.

Auch ist es denkbar, dass ein Gesamtupdate aller vorher von dem Bediener ausgewählten tragbaren Werkzeuge die obig beschriebenen Update-Schritte in sukzessiver, zeitlich aufeinander folgender Reihenfolge umfasst.

Denkbar ist nämlich, dass zunächst das Firmware-Update von dem Webhostserver, beispielsweise über den Accesspoint zunächst an ein vorher vorgebbar ausgewähltes tragbares Werkzeug aufgespielt wird und erst im Anschluss daran von diesem tragbaren Werkzeug über beispielsweise wiederrum den Accesspoint eine vorgebbare Auswahl oder auch alle übrigen Werkzeuge des gleichen Netzwerkes upgedated werden. Ein derartiges Update-Verfahren enthält daher - wie obig bereits erwähnt - den Webhostserver und den weiteren Webhostserver in Form des vorher separat upgedateten tragbaren Werkzeuges, welches im Anschluss daran eine Auswahl oder alle übrigen tragbaren Werkzeuge des gleichen Sub-Netzwerkes von sich aus updated.

Gemäß zumindest einer Ausführungsform erfolgt ein Austausch von Kommunikationsdaten unter Verwendung eines TCP/IP-Protokolls. Ein TCP/IP-Protokoll ist eine Protokollfamilie für die Vermittlung und den Transport von Datenpaketen, d.h. Kommunikationsdaten zu beispielsweise einem dezentralen Netzwerk, also beispielsweise den tragbaren Werkzeugen.

Die Abkürzung "TCP/IP" steht für die beiden Protokolle "Transmission Control Protocol" (TCP) und "Internet Protocol" (IP).

Die wesentliche Funktion des TCP/IP-Protokolls ist, dafür Sorge zu tragen, dass die Kommunikationsdaten innerhalb des obig beschriebenen dezentralen Netzwerkes bei dem jeweiligen tragbaren Werkzeugen ankommen. Da Datenpakete auf unteren Übertragungsschichten verloren gehen können, fordert das TCP/IP-Protokoll gegebenenfalls Datenpakete, d.h. die Kommunikationsdaten noch einmal an. Ebenso findet das TCP/IP-Protokoll Stationen über Netzwerke hinweg, auch wenn deren Standort nicht bekannt ist.

Gemäß zumindest einer Ausführungsform werden Kommunikationsdaten, welche durch die drahtlose Kommunikation zwischen dem Webhostserver und jedem der tragbaren Werkzeuge und/oder Kommunikationsdaten, welche zwischen jedem der tragbaren Werkzeuge übertragen werden, von dem Webhostserver und/oder jedem der tragbaren Werkzeuge verschlüsselt, gemäß eines Verschlüsselungsprotokolls, übertragen.

Ein derartiger verschlüsselter Kommunikationskanal stellt es daher sicher, dass gewollt oder ungewollt keine vorher nicht ausgewählten tragbaren Werkzeuge beispielsweise des gleichen Subsystems oder auch eines anderen Subsystems an dem Firmware-Update beteiligt sind.

Zum Verschlüsseln kann daher jedes der drahtlosen Werkzeuge ein Modul zum Verschlüsseln von Kommunikationsdaten sowie ein Modul zum Entschlüsseln von Kommunikationsdaten umfassen. Jedes der drahtlosen Werkzeuge kann daher Kommunikationsdaten des Webhostservers und/oder Kommunikationsdaten von anderen tragbaren Werkzeugen entschlüsseln und/oder verschlüsselt an diese versenden.
Darüber hinaus umfasst die vorliegende Erfindung ein Mittel zur Verbauung in zumindest einem tragbaren Werkzeug zur drahtlosen Kommunikation zwischen einem Webhostserver und dem tragbaren Werkzeuge, umfassend zumindest ein Empfang- und/oder Übertragungselement, wobei über das Empfangselement, insbesondere ein Firmware-Update, auf das tragbare Werkzeug aufspielbar ist, und wobei mittels des Empfangs- und/oder Übertragungselements das tragbare Werkzeug innerhalb des gleichen Subnetzwerks mit dem Webhostserver und/oder mit weiteren tragbaren Werkzeugen in Kommunikationsverbindung bringbar ist.

Darüber hinaus umfasst die vorliegende Erfindung ein Kommunikationssystem zur drahtlosen Kommunikation zwischen einem Webhostserver und zumindest zwei tragbaren Werkzeugen. Dabei sind alle für das hier beschriebene Verfahren offenbarten Merkmale auch für das nunmehr beschriebene Kommunikationssystem sowie für hier beschriebene Mittel zur drahtlosen Kommunikation zur drahtlosen Kommunikation offenbart und umgekehrt.

Gemäß zumindest einer Ausführungsform umfasst das Kommunikationssystem zur drahtlosen Kommunikation zwischen einem Webhostserver und zumindest zwei tragbaren Werkzeugen einen Webhostserver sowie die zumindest zwei tragbaren Werkzeuge, wobei die Werkzeuge jeweils Mittel zur drahtlosen Kommunikation sowie einen Datenspeicher und eine Werkzeugsteuerung umfassen. Über den Webhostserver sind Kommunikationsdaten, insbesondere ein Firmware-Update, auf jedes der tragbaren Werkzeuge aufspielbar, wobei die tragbaren Werkzeuge innerhalb des gleichen Subnetzwerkes mit dem Webhostserver und/oder untereinander in Kommunikationsverbindung stehen.

Dabei umfasst das hier beschriebene Kommunikationssystem zur drahtlosen Kommunikation die gleichen Vorteile und Ausgestaltungen wie im Zusammenhang mit dem obig beschriebenen Verfahren dargestellt.

Im Folgenden werden das hier beschriebene Verfahren zur drahtlosen Kommunikation sowie ein hier beschriebenes Kommunikationssystem zur drahtlosen Kommunikation anhand eines Ausführungsbeispiels näher erläutert.

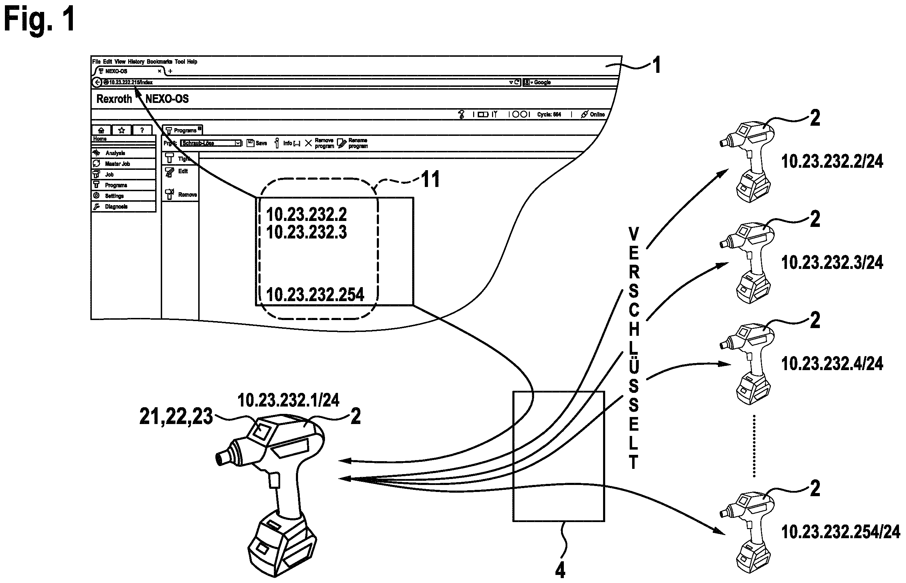

Die Figur 1 zeigt daher ein Ausführungsbeispiel eines hier beschriebenen Verfahrens sowie eines hier beschriebenen Kommunikationssystems.

In dem Ausführungsbeispiel und in der Figur sind gleiche oder gleichwirkende Bestandteile jeweils mit den gleichen Bezugszeichen versehen. Die hier dargestellten Elemente sind nicht als maßstabsgerecht anzusehen, vielmehr können einzelne Elemente zum besseren Verständnis übertrieben groß dargestellt sein.

In der Figur 1 ist anhand einer schematischen Darstellung ein Kommunikationssystem 100 zur drahtlosen Kommunikation zwischen einem Webhostserver 1 und einer Mehrzahl von tragbaren Werkzeugen 2 vorliegend in der Ausgestaltung von Schraubwerkzeugen dargestellt. Das Kommunikationssystem 100 umfasst daher solche tragbaren Werkzeuge, welche jeweils Mittel zur drahtlosen Kommunikation 21 sowie einen Datenspeicher 22 und eine Werkzeugsteuerung 23 umfassen.

Über den Webhostserver 1 werden die Kommunikationsdaten, insbesondere das hier beschriebene Firmware-Update, auf jedes der tragbaren Werkzeuge 2 aufgespielt (siehe Pfeilrichtungen). Dabei ist entscheidend, dass die tragbaren Werkzeuge 2 innerhalb des gleichen Subnetzwerkes 11 mit dem Webhostserver 1 und auch untereinander in Kommunikationsverbindung stehen.

Dabei ist eine Kommunikationsverbindung vorliegend zwischen den jeweiligen tragbaren Werkzeugen 2 und dem Webhostserver 1 statt direkt indirekt, d.h. über einen zwischen dem Webhostserver 1 und den tragbaren Werkzeugen 2 angeordneten Accesspoint-Server 4 hergestellt. Über einen Webbrowser des Webhostservers 1 kann der Bediener gemäß der Figur 1 mit dem Akkuschrauber, welcher mit einer IP-Adresse 10.23.232.1/24 verbunden ist, verbunden werden. In einem Menüpunkt des Webbrowsers "Firmware-Update" können über eine zusätzliche Liste all diejenigen tragbaren Werkzeuge, die sich im gleichen Subnetz 11 (10.23.232.XXX) befinden, für das Update ausgewählt werden, so dass in dem Beispiel der Figur 1 vorliegend alle 254 tragbaren Werkzeuge 1 auf einen neuen Softwarestand gebracht werden können, ohne dass sich jeweils separat auf jedes der tragbaren Werkzeuge 2 eingeloggt werden müsste, wie dies der Stand der Technik bisher nachteilig vorschlägt.

Zusätzlich sollte erwähnt werden, dass im Zusammenspiel mit einem derartigen Verfahren zur drahtlosen Kommunikation, insbesondere mit dem hier beschriebenen Firmware-Update, es ebenso möglich ist, dass auf besonders einfache Art und Weise ein Backup-System von einem, mehreren oder allen Werkzeugen 2 und/oder dem Accesspoint-Server 4 und/oder dem Webhostserver 1 erstellt werden kann, so dass durch ein somit erstelltes Backupsystem keine Uploaddaten verloren gehen können.

Die Erfindung ist nicht durch die Beschreibung anhand des Ausführungsbeispiels beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder in dem Ausführungsbeispiel angegeben ist.

### Bezugszeichenliste

- 1: Webhostserver
- 2: tragbare/drahtlose Werkzeuge
- 4: Accesspoint-Server
- 11: Subnetzwerk
- 21: Kommunikation
- 22: Datenspeicher
- 23: Werkzeugsteuerung
- 100: Kommunikationssystem

## Patentansprüche

1. Verfahren zum Firmware-Update zwischen einem Webhostserver (1) und zumindest zwei tragbaren Werkzeugen (2), welche tragbaren Werkzeuge (2) jeweils Mittel zur drahtlosen Kommunikation (21) sowie einen Datenspeicher (22) und eine Werkzeugsteuerung (23)umfassen, **dadurch gekennzeichnet, dass** von dem Webhostserver (1) ein Firmware-Update auf ein erstes auswählbares tragbares Werkzeug (2) aufgespielt wird, und im Anschluss daran ein Firmware-Update ausgehend von diesem ersten tragbaren Werkzeug (2) auf ein zweites tragbares Werkzeug (2) im gleichen Netzwerk aufgespielt wird, so dass das erste tragbare Werkzeug die Rolle des Webhostservers (1) übernimmt.

2. Verfahren nach Anspruch 1,
**dadurch gekennzeichnet, dass**
von dem Webhostserver (1) eine Auswahlliste bereitgestellt wird, wobei auf der Auswahlliste alle tragbaren Werkzeuge (2) des gleichen Subnetzwerks (11) dargestellt sind, und wobei von einem Bediener diejenigen tragbaren Werkzeuge (2) ausgewählt werden, für welche eine drahtlose Kommunikation (21) untereinander und/oder mit dem Webhostserver (1) etabliert werden soll.

3. Verfahren nach Anspruch 1,
**dadurch gekennzeichnet, dass**
eine Kommunikationsverbindung zwischen dem Webhostserver (1) und jedem der tragbaren Werkzeuge (2) über einen gemeinsamen Accesspoint-Server (4) etabliert ist.

4. Verfahren nach Anspruch 1 oder 2,
**dadurch gekennzeichnet, dass**
das Firmware-Update unter Verwendung eines TCP/IP-Protokolls erfolgt.

5. Verfahren nach zumindest einem der vorhergehenden Ansprüche,
**dadurch gekennzeichnet, dass**
das Firmware-Update, welches durch die drahtlose Kommunikation (21) zwischen dem Webhostserver (1) und einem der tragbaren Werkzeuge (2) und/oder das Firmware-Update welches zwischen jedem der tragbaren Werkzeuge (2) übertragen wird, von dem Webhostserver (1) und/oder jedem der tragbaren Werkzeuge (2) verschlüsselt, gemäß eines Verschlüsselungsprotokolls, übertragen wird.

6. Tragbares Werkzeug (2) mit Mittel zur drahtlosen Kommunikation (21)
zwischen einem Webhostserver (1) und dem tragbaren Werkzeuge (2), das einen Datenspeicher (22) und eine Werkzeugsteuerung (23) umfasst, umfassend zumindest ein Empfangs- und/oder Übertragungselement,
**dadurch gekennzeichnet, dass**
das tragbare Werkzeug (2) ausgebildet ist, um über das Empfangselement ein Firmware-Update, auf das tragbare Werkzeug (2) aufzuspielen, und das tragbare Werkzeug (2) innerhalb des gleichen Subnetzwerks (11) mit dem Webhostserver (1) und mit weiteren tragbaren Werkzeugen in Kommunikationsverbindung zu bringen, und im Anschluss daran ein Firmware-Update ausgehend von dem tragbaren Werkzeug (2) auf ein zweites tragbares Werkzeug im gleichen Netzwerk aufzuspielen, so dass das tragbare Werkzeug (2) die Rolle des Webhostservers (1) übernimmt.

## Claims

1. Method for updating firmware between a web host server (1) and at least two portable tools (2), which portable tools (2) each comprise means for wireless communication (21) and a data memory (22) and a tool controller (23), **characterized in that** the web host server (1) installs a firmware update on a first selectable portable tool (2), and a firmware update is then installed on a second portable tool (2) in the same network starting from this first portable tool (2), with the result that the first portable tool assumes the role of the web host server (1).

2. Method according to Claim 1,
**characterized in that**
the web host server (1) provides a selection list, wherein all portable tools (2) in the same subnetwork (11) are presented in the selection list, and wherein those portable tools (2) for which wireless communication (21) between one another and/or with the web host server (1) is intended to be established are selected by an operator.

3. Method according to Claim 1,
**characterized in that**
a communication connection is established between the web host server (1) and each of the portable tools (2) via a common access point server (4).

4. Method according to Claim 1 or 2,
**characterized in that**
the firmware update is effected using a TCP/IP protocol.

5. Method according to at least one of the preceding claims,
**characterized in that**
the firmware update which is transmitted between the web host server (1) and one of the portable tools (2) by means of the wireless communication (21) and/or the firmware update which is transmitted between each of the portable tools (2) is/are transmitted by the web host server (1) and/or each of the portable tools (2) in a manner encrypted according to an encryption protocol.

6. Portable tool (2) having means for wireless communication (21) between a web host server (1) and the portable tool (2), which comprises a data memory (22) and a tool controller (23), comprising at least one receiving and/or transmitting element,
**characterized in that**
the portable tool (2) is designed to install a firmware update on the portable tool (2) via the receiving element and to communicatively connect the portable tool (2) inside the same subnetwork (11) to the web host server (1) and to further portable tools and to then install a firmware update on a second portable tool in the same network starting from the portable tool (2), with the result that the portable tool (2) assumes the role of the web host server (1).

## Revendications

1. Procédé de mise à jour de logiciel entre un serveur hôte Web (1) et au moins deux outils portables (2), lesdits outils portables (2) comportant respectivement des moyens de communication sans fil (21) ainsi qu'une mémoire de données (22) et une commande d'outils (23), **caractérisé en ce qu'**une mise à jour de logiciel est installée par le serveur hôte Web (1) sur un premier outil portable (2) sélectionnable et, à la suite de celle-ci, une mise à jour de logiciel est installée à partir de ce premier outil portable (2) sur un deuxième outil portable (2) dans le même réseau, de sorte que le premier outil portable prend en charge le rôle du serveur hôte Web (1).

2. Procédé selon la revendication 1, **caractérisé en ce qu'**une liste de sélection est fournie par le serveur hôte Web (1), la liste de sélection présentant tous les outils portables (2) du même sous-réseau (11) et les outils portables (2) sélectionnés par un opérateur étant ceux pour lesquels une communication sans fil (21) peut être établie entre eux et/ou avec le serveur hôte Web (1).

3. Procédé selon la revendication 1, **caractérisé en ce qu'**une liaison de communication est établie entre le serveur hôte Web (1) et chacun des outils portables (2) par le biais d'un serveur de point d'accès (4) commun.

4. Procédé selon la revendication 1 ou 2, **caractérisé en ce que** la mise à jour de logiciel est effectuée en utilisant un protocole TCP/IP.

5. Procédé selon au moins l'une des revendications précédentes, **caractérisé en ce que** la mise à jour de logiciel qui est transmise par la communication sans fil (21) entre le serveur hôte Web (1) et l'un des outils portables (2) et/ou la mise à jour de logiciel qui est transmise entre chacun des outils portables (2) sont transmises par le serveur hôte Web (1) et/ou chacun des outils portables (2) en étant chiffrées conformément à un protocole de chiffrement.

6. Outil portable (2) comprenant des moyens destinés à la communication sans fil (21) entre un serveur hôte Web (1) et l'outil portable (2), lequel comprend une mémoire de données (22) et une commande d'outils (23), comprenant au moins un élément de réception et/ou de transmission,
**caractérisé en ce que**
l'outil portable (2) est configuré pour, par le biais de l'élément de réception, installer une mise à jour de logiciel sur l'outil portable (2) et mettre l'outil portable (2) en liaison de communication à l'intérieur du même sous-réseau (11) avec le serveur hôte Web (1) et avec des outils portables supplémentaires et, à la suite de cela, installer une mise à jour de logiciel à partir de l'outil portable (2) sur un deuxième outil portable dans le même réseau, de sorte que l'outil portable (2) prend en charge le rôle du serveur hôte Web (1).
